## Europäisches Patentamt
## European Patent Office
## Office européen des brevets

(11) Publication number: **0 196 426**
**B1**

(12) **EUROPEAN PATENT SPECIFICATION**

(45) Date of publication of patent specification: **08.02.89**

(21) Application number: **86101790.3**

(22) Date of filing: **13.02.86**

(51) Int. Cl.⁴: **A 01 B 71/06,** A 01 B 59/042

(54) **Implement attachable to a tractor.**

(30) Priority: **05.03.85 GB 8505578**
**12.08.85 GB 8520173**

(43) Date of publication of application:
**08.10.86 Bulletin 86/41**

(45) Publication of the grant of the patent:
**08.02.89 Bulletin 89/06**

(84) Designated Contracting States:
**AT BE CH DE FR GB LI NL SE**

(56) References cited:
**FR-A-2 323 307**
**FR-A-2 363 974**
**FR-A-2 415 230**
**NL-A-8 100 145**
**US-A-3 908 398**
**US-A-4 008 905**

**Brochure "Haying Equipment", Deere and Company, publ. 1983**

(73) Proprietor: **DEERE & COMPANY**
**1 John Deere Road**
**Moline Illinois 61265 (US)**

(72) Inventor: **Franet, Roger**
**22, Rue Edouard Branly**
**F-57200 Sarreguemines (FR)**
Inventor: **Lamsfuss, Uwe**
**Lessingstrasse 4**
**D-5653 Leichlingen 1 (DE)**

(74) Representative: **Collins, Geoffrey Stainton et al**
**c/o Reddie & Grose 16 Theobalds Road**
**London WC1X 8PL (GB)**

Courier Press, Leamington Spa, England.

## Description

This invention relates to an implement which has a drawbar attachable to lower links of a tractor and which has a drive line for transmitting power from the tractor to the implement with a primary forward drive shaft for connection to the tractor, a secondary rearward drive shaft for connection to the implement, and a double cross bearing universal joint therebetween, the implement being attachable to the tractor by a yoke which is connected to the forward end of the drawbar for movement relative thereto about a vertical pivot.

Power from an agricultural tractor to its trailed implement, e.g. a mower-conditioner, is usually transmitted by way of a long drive line connected at its forward end to a power take-off of the tractor and at its rearward end to a transmission unit on the mower-conditioner. One arrangement is disclosed in a brochure called "Haying Equipment" in relation to a machine under the name of the "1326 Rotary Mower/Conditioner" of the present applicants. In that machine the drive line partly overlies and partly underlies a pivoted drawbar or tongue of the mower-conditioner when at the straight ahead position, and is in two main portions (i.e. a short forward shaft and a long rearward shaft) which are connected via an intermediate shaft journalled in bearings on a support attached to the drawbar. The connections of the two shafts are by way of universal joints.

In service, when the tractor has to turn between passes over the crop, the working angle of these joints is relatively large, e.g. 45 degrees. The larger the angle under load conditions the lower is the life of the power line due to wear at the universal joint cross bearings. At 45 degrees wear is very significant, and it is economically undesirable to run the implement under load at such an angle.

To overcome this problem, two solutions are offered in arrangements of drive lines currently being marketed. The first uses a swivel gearbox coupled to a short forward shaft (mentioned above) and to a belt drive (instead of the longer rearward shaft also mentioned above). Although the working angle of such a design can be large without undue wear, the cost of the gearbox is somewhat high and a shaft drive is generally to be preferred over a belt drive for reasons of reliability. The second arrangement avoids employing a belt drive by using a further swivel gearbox at the implement end of the drive line, with a conventional rearward shaft connecting the gearboxes. This certainly provides a robust drive, but clearly the cost is high.

In GB-A-2 012 918 a drive line between a tractor and its trailed implement has been proposed which consists of a primary shaft linked to a secondary shaft via a wide angle universal joint which is a double Hooke's joint provided with an inner double yoke and two outer yokes. Each outer yoke has a pair of bearings receiving a pair of the trunnions of a joint cross whilst the remaining pair of trunnions of the cross is received in a pair of bearings of the associated inner yoke. Hence the joint is a double cross bearing joint. The primary shaft is connected to the tractor and the secondary shaft to the implement, whilst the double joint is located at a pivot point between the tractor and implement. It is said that in practice angles of up to 90° can be used between the tractor and implement during a tight turn.

The present invention enables the loading on such a drive line to be further reduced, the drive line to be well located, and a simple and robust connection to the tractor to be provided.

According to the present invention an intermediate shaft is connected to the secondary shaft by a single cross bearing universal joint and to the primary shaft by the double cross bearing universal joint, the intermediate shaft being supported in a bearing or bearings suspended from the drawbar and holding the shaft against swinging movement, and the yoke is connected to the forward end of the drawbar for movement relative thereto about a horizontal pivot, the double cross bearing universal joint being spaced rearwardly of the vertical pivot.

By siting the double joint away from the pivot point between the tractor and implement, the primary shaft will be turned through an angle at its connection with the tractor whenever the tractor makes a turn. Thus the double joint has a reduced working angle and its wear is lessened.

Furthermore, the drive line is well located by way of the bearings for the intermediate shaft and the yoke provides a simple and robust connection to the tractor.

An embodiment of the invention will now be described with reference to the accompanying diagrammatic drawings in which:

Figure 1 shows in plan an agricultural tractor and pulled implement;

Figure 2 is a side view of a drive line for transmission of power between the tractor and implement of Figure 1; and

Figure 3 is a view from below of the drive line of Figure 2, but in a position at which the tractor is at right angles to the implement.

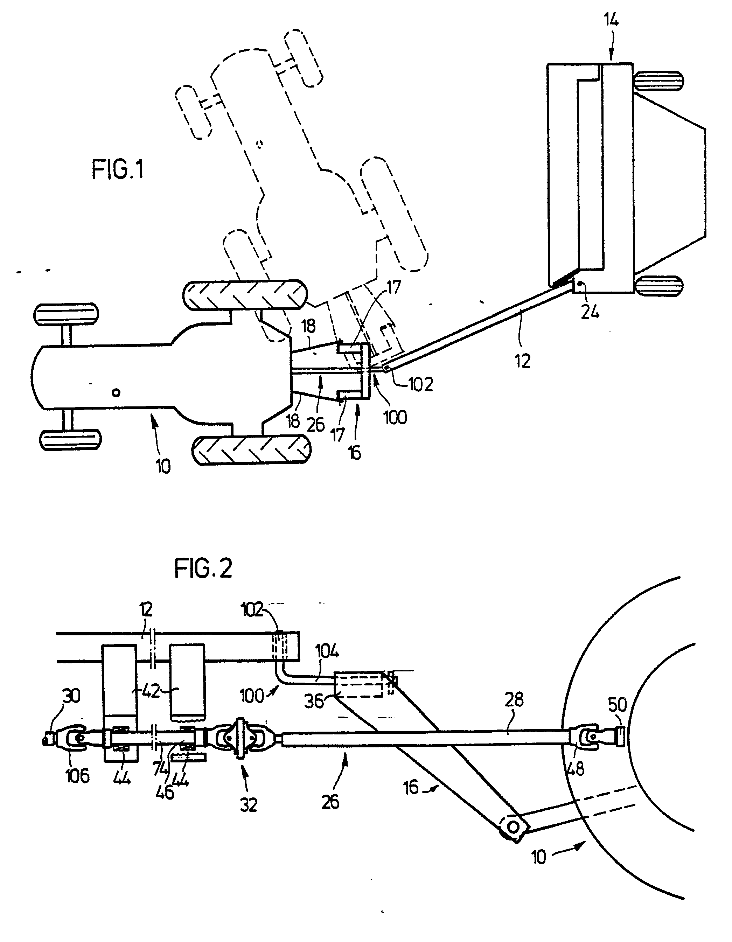

In Figure 1 a tractor 10 is connected by way of a drawbar (or tongue) 12 to an implement 14 which in the present instance is a mower-conditioner. At its forward end the drawbar 12 supports a U-shaped yoke 16 of which the arms 17 of the "U" are attached to lower links 18 of a standard 3-point hitch of the tractor and so are aligned with the latter's fore-and-aft direction. The yoke 16 is suspended by way of an L-shaped rod 100 one arm 102 of which extends vertically upwardly through the drawbar 12 and the other arm 104 of which extends horizontally through yoke 16, the arms 102 and 104 being pivotal allowing the yoke thus to have two degrees of freedom of movement relative to the drawbar 12. At its rearward end, the drawbar 12 is connected at pivot 24 to the left hand side of the implement 14.

The disposition of the tractor 10 and mower-conditioner 14 indicated in full lines in Figure 1 is the normal working position which is used as the implement 14 is pulled behind, and somewhat to one side of, the tractor in a pass over a grass crop. The tractor 10 is turned at the end of one pass to be aligned for the next pass, and the tractor position at the turn is shown in broken lines, the fore-and-aft direction of the tractor being at right angles to the drawbar 12. Power is transmitted from the tractor 10 to the implement 14 by way of a drive line 26 which for the major part of its length underlies the drawbar 12.

The main components of the drive line 26 are a forward primary shaft 28, a rearward secondary shaft 30 (a part only of which is shown), an intermediate shaft 74 and a double cross bearing constant velocity universal joint 32 between the shafts 28 and 74. Double cross bearing constant velocity universal joints are readily available and so their construction will not be described. The intermediate shaft 74 is connected to the secondary shaft 30 by a constant velocity universal joint 106 with a single cross bearing. A pair of spaced apart supports is provided on the drawbar 12 for the intermediate shaft 74. Each support has a downwardly extending channel bracket or sling 42 (one being shown partially broken away), which is attached to the drawbar 12, and a support bearing 44 for the shaft 74 on the underside of the base of the channel. The intermediate shaft 74 is thus maintained in a non-swinging position parallel to the drawbar 12.

In more detail and in summary, starting at the forward tractor end of the drive line 26, the primary shaft 28 is connected through a (single cross bearing) universal joint 48 to a coupler 50 for a power take-off shaft (not shown) of the tractor. At its rearward end the primary shaft 28 is attached, via the double cross bearing universal joint 32, to the intermediate shaft 74 which in turn is connected via the joint 106 to the secondary shaft 30 which is connected, through yet another (single cross bearing) universal joint (not shown), to a coupler for a drive input on the implement 14.

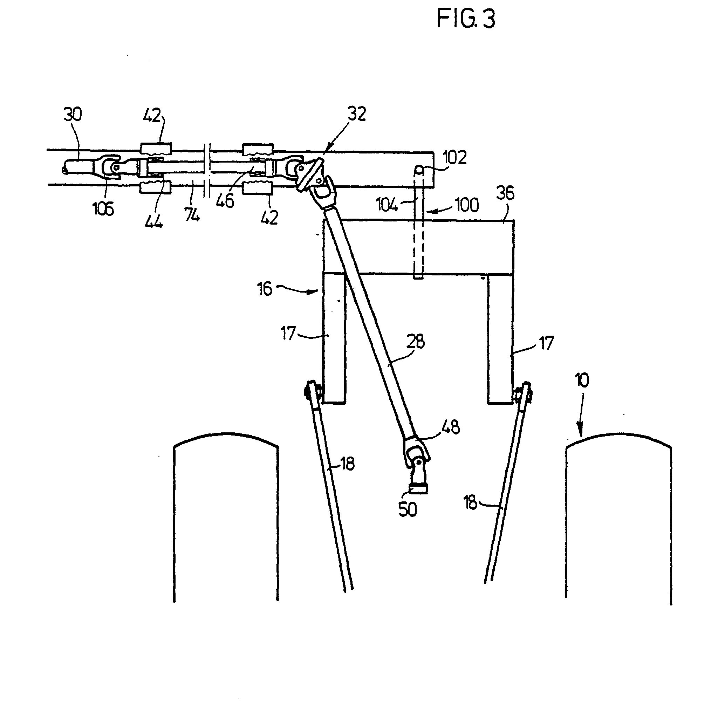

Figure 2 shows the drive line 26 in its normal working position corresponding to that in full lines in Figure 1, whilst Figure 3 illustrates the position which the drive line assumes when the tractor is in the broken line position at turn around between passes. It will readily be seen that if the implement is to continue functioning at turn around, then the power must turn through a total of 90°. With the arrangement illustrated the power is taken through a working angle of 20° at the joint 48, and then through a working angle of 35° on the input side of the double cross bearing universal joint 32 and through a further 35° on the output side of the joint. Since the implement works only perhaps 5 to 10% of its total operating time at turn around and the maximum angle through which the power is taken is only 35° acceptable wear and therefore reasonable reliability when using full power on the turn can be achieved. Additionally the arrangement is compact and so there is no fouling of neighbouring components, for example the wheels, during transportation and the drive line does not swing outside the confines of the drawbar 12 or the yoke 16 even in a 90° turn as can be seen in Figure 3, the intermediate shaft 74 being held against swinging movement by the bearings 44.

## Claims

1. An implement which has a drawbar (12) attachable to lower links (18) of a tractor (10) and which has a drive line (26) for transmitting power from the tractor to the implement (14) with a primary forward drive shaft (28) for connection to the tractor, a secondary rearward drive shaft (30) for connection to the implement, and a double cross bearing universal joint (32) therebetween, the implement (14) being attachable to the tractor (10) by a yoke (16) which is connected to the forward end of the drawbar (12) for movement relative thereto about a vertical pivot, characterised in that an intermediate shaft (74) is connected to the secondary shaft (30) by a single cross bearing universal joint (106) and to the primary shaft (28) by the double cross bearing universal joint (32), the intermediate shaft (74) being supported in a bearing or bearings (44) suspended from the drawbar (12) and holding the shaft (74) against swinging movement, and the yoke (16) is connected to the forward end of the drawbar (12) for movement relative thereto about a horizontal pivot, the double cross bearing universal joint (32) being spaced rearwardly of the vertical pivot.

2. An implement according to claim 1 characterised in that the implement (14) is a mower-conditioner.

3. A tractor and implement combination characterised in that the implement is in accordance with claim 1 or 2.

## Patentansprüche

1. Gerät, das eine Zugstange (12) aufweist, welche an unteren Gliedern (18) eines Schleppers (10) anbringbar ist und welches eine Antriebslinie (26) zum Übertragen von Kraft von dem Schlepper zu dem Gerät (14) aufweist, mit einer ersten vorderen Antriebswelle (28) zur Verbindung mit dem Schlepper, einer zweiten rückwärtigen Antriebswelle (30) zur Verbindung mit dem Gerät und zwischen diesen mit einem Doppelkreuzlager-Universalgelenk (32), wobei das Gerät (14) mit dem Schlepper (10) über einen gabelförmigen Teil (16) verbindbar ist, der mit dem vorderen Ende der Zugstange (12) zur Ausführung relativer Bewegung gegenüber dieser um einen vertikalen Drehzapfen verbindbar ist, dadurch gekennzeichnet, daß eine Zwischenwelle (74) mit der zweiten Welle (30) durch ein Einfachkreuzlager-Universalgelenk (106) und mit der ersten Welle (28) durch das Doppelkreuzlager-Universalgelenk (32) verbunden ist, wobei die Zwischenwelle (74) in einem Lager oder in Lagern (44) unterstützt ist, die an der Zugstange (12) abgehängt sind und die Welle (74) gegen schwingende Bewegung halten, und daß der gabelförmige Teil (16) mit dem vorderen Ende der Zugstange (12) für Bewegungen relativ zu dieser um einen horizontalen Schwenkzapfen verbunden ist und das Doppelkreuzlager-Universalgelenk (32) im Abstand nach rückwärts von dem vertikalen Drehzapfen angeordnet ist.

2. Gerät nach Anspruch 1, dadurch gekennzeichnet, daß das Gerät (14) ein Mäh-Konditionierer ist.

3. Schlepper- und Gerätekombination, dadurch gekennzeichnet, daß das Gerät in Übereinstimmung mit Anspruch 1 oder 2 ausgebildet ist.

**Revendications**

1. Outil qui comprend un timon (12) attachable à des bras de liaison inférieurs (18) d'un tracteur (10) et qui comporte une ligne d'entraînement (26) pour transmettre la puissance du tracteur à l'outil (14), avec un arbre d'entraînement principal avant (28) pour l'accouplement au tracteur, un arbre d'entraînement secondaire arrière (30) pour l'accouplement à l'outil, et un joint universel à paliers à double croix (32) entre ces arbres, l'outil (14) pouvant être attaché au tracteur (10) par un attelage (16) qui est connecté à l'extrémité avant du timon (12) pour un mouvement par rapport à celui-ci autour d'un pivot vertical, caractérisé en ce qu'un arbre intermédiaire (74) est accouplé à l'arbre secondaire (30) par un joint universel à palier à simple croix (106) et à l'arbre primaire (28) par le joint universel à paliers à double croix (32), l'arbre intermédiaire (74) étant supporté dans un palier ou dans des paliers (44) suspendus au timon (12) et retenant l'arbre (74) contre un mouvement oscillant, et l'attelage (16) est relié à l'extrémité avant du timon (12) pour un mouvement par rapport à celui-ci autour d'un pivot horizontal, le joint universel à paliers à double croix (32) étant espacé vers l'arrière du pivot vertical.

2. Outil suivant la revendication 1, caractérisé en ce que l'outil (14) est une faucheuse-conditionneuse.

3. Combinaison d'un tracteur et d'un outil, caractérisée en ce que l'outil est conforme à la revendication 1 ou 2.

FIG.1

FIG.2

FIG. 3

2